# EUROPÄISCHE PATENTSCHRIFT

(11) **EP 2 510 044 B1**
(45) Veröffentlichungstag und Bekanntmachung des Hinweises auf die Patenterteilung: **31.05.2017**
(21) Anmeldenummer: 10787420.8
(22) Anmeldetag: 03.12.2010
(51) Int. Cl.: C08G 69/28, C08G 69/26

(54) **VERFAHREN ZUR HERSTELLUNG VON POLYAMIDEN**
PROCESS FOR PREPARING POLYAMIDES
PROCÉDÉ DE FABRICATION DE POLYAMIDES

(30) Priorität: 08.12.2009 EP 09178358
(43) Veröffentlichungstag der Anmeldung: 17.10.2012
(73) Patentinhaber: BASF SE, 67056 Ludwigshafen am Rhein (DE)
(72) Erfinder: EL-TOUFAILI, Faissal-Ali, 67063 Ludwigshafen (DE); DESBOIS, Philippe, 68535 Edingen-Neckarhausen (DE); WOLLNY, Andreas, 67063 Ludwigshafen (DE); LAWRENZ, Sven, 68549 Ilvesheim (DE); SCHMIDT, Christian, 67061 Ludwigshafen (DE)
(74) Vertreter: BASF IP Association
(86) Internationale Anmeldenummer: PCT/EP2010/068788
(87) Internationale Veröffentlichungsnummer: WO 2011/069892

(56) Entgegenhaltungen:
- WO-A1-2007/085406
- WO-A1-2008/155281
- DATABASE WPI Week 200441 Thomson Scientific, London, GB; AN 2004-433351 XP002624017, -& JP 2004 091595 A (TOYOBO KK) 25. März 2004 (2004-03-25)

## Beschreibung

Die Erfindung betrifft ein Verfahren zur Herstellung eines Polyamids auf Basis von Dicarbonsäuren und Diaminen, insbesondere zur Herstellung von teilaromatischen teilkristallinen Polyamiden.

Die Herstellung von insbesondere Polyamiden mit hoher Viskositätszahl erfordert typischerweise die Anwendung hoher Umsetzungstemperaturen. Diese wiederum führen zum erhöhten Ablauf von Nebenreaktionen. Die hohe Viskosität führt zudem zu einer verstärkten Belagsbildung im Reaktor und im schlimmsten Fall zu einer Verstopfung des Reaktors. Ausfallzeiten und eine aufwändige Reaktorreinigung sind die Folgen.

Aus der WO-A-2008/155281 ist bereits ein Verfahren zur Herstellung von Polyamiden bekannt, das die Stufen A), B), C) und E) der vorliegenden Erfindung bereits umfasst. Dieses Verfahren lässt in Bezug auf die Reaktionsführung bei der Amin Nachdosierung im Entgasungs-Extruder noch zu wünschen übrig.

Der vorliegenden Erfindung lag daher die Aufgabe zugrunde, den zuvor genannten Nachteilen anzuhelfen.

Demgemäß wurde ein neues und verbessertes Verfahren zur Herstellung eines Polyamids auf Basis von Dicarbonsäuren und Diaminen mit folgenden Stufen gefunden:
A) Bereitstellen eines wässrigen Monomerengemisches aus Dicarbonsäuren und Diaminen, wobei das molare Verhältnis von Dicarbonsäuren zu Diaminen so eingestellt wird, dass am Ausgang von Stufe C) ein molarer Unterschuss an Dicarbonsäuren oder Diaminen von 1 bis 10 mol-%, bezogen auf die jeweils andere Komponente, vorliegt,
B) Überführen des wässrigen Gemisches aus Stufe A) in einen kontinuierlich betriebenen Verdampferreaktor, in dem Diamine und Dicarbonsäuren bei einer Temperatur im Bereich von 100 bis 370°C und einem Druck im Bereich von 1 bis 50 bar umgesetzt werden,
C) Überführen des Gemisches aus Stufe B) in einen Abscheider, der bei einer Temperatur im Bereich von 100 bis 370°C und einem Druck im Bereich von 1 bis 50 bar betrieben wird, unter Abtrennung von gasförmigen Komponenten,
D) Überführen des Gemisches aus Stufe C) zusammen mit Diamin oder Dicarbonsäure in einer zum Ausgleich des molaren Unterschusses geeigneten Menge in einen Rohr-Reaktor, der bei einer Temperatur im Bereich von 100 bis 370°C und einem Druck im Bereich von 1 bis 50 bar betrieben wird, für eine Verweilzeit im Bereich von 10 Sekunden bis 30 Minuten,
E) Überführen des Gemisches aus Stufe D) in einen Extruder, der bei einer Temperatur im Bereich von 150 bis 400°C betrieben wird, für eine Verweilzeit im Bereich von 10 Sekunden bis 30 Minuten, unter Entfernung von gasförmigen Komponenten durch Entgasungsöffnungen,
wobei das Monomerengemisch in Stufe A) aus einem Dicarbonsäurengemisch aus 60 bis 88 Gew.-% Terephthalsäure und 12 bis 40 Gew.-% Isophthalsäure, in dem auch bis zu 20 Gew.-% des Dicarbonsäuregemisches durch andere Dicarbonsäuren ersetzt sein können, und Hexamethylendiamin besteht, das bis zu 20 Gew.-% durch andere C₂₋₃₀-Diamine ersetzt sein kann

Das erfindungsgemäße Verfahren erlaubt die Verminderung der Viskosität des Polyamids vor der Festphasenpolykondensation und erlaubt eine Verminderung der Verweilzeit bei hoher Temperatur, wodurch weniger Nebenreaktionen wie Triaminbildung auftreten und damit die Qualität des Produktes verbessert wird. Es wurde erfindungsgemäß gefunden, dass eine Verfahrensweise, bei der zunächst Dicarbonsäure oder Diamin im Unterschuss vorliegt und dieser Unterschuss erst beim Eintrag in einen Extruder zur Nachkondensation ausgeglichen wird, die Herstellung von insbesondere teilaromatischen teilkristallinen Polyamiden mit hoher Viskositätszahl erlaubt. Das Verfahren weist Vorteile auf, wenn das Monomerengemisch in Stufe A) aus einem Dicarbonsäurengemisch aus 60 bis 88 Gew.-% Terephthalsäure und 12 bis 40 Gew.-% Isophthalsäure, in dem auch bis zu 20 Gew.-% des Dicarbonsäuregemisches durch andere Dicarbonsäuren ersetzt sein können, und Hexamethylendiamin besteht, das bis zu 20 Gew.-% durch andere C₂-C₃₀-Diamine ersetzt sein kann.

Das erfindungsgemäße Verfahren weist die Sequenz Verdampferreaktor-Abscheider-Rohr-Reaktor, Extruder auf, wobei in den Verdampferreaktor ein wässriges Monomerengemisch aus Dicarbonsäuren und Diaminen geführt wird. Dabei wird das molare Verhältnis von Dicarbonsäuren zu Diaminen so eingestellt, dass am Ausgang der nachfolgenden Abscheiderstufe ein molarer Unterschuss an Dicarbonsäuren oder Diaminen von 1 bis 10 mol-%, bezogen auf die jeweils andere Komponente, vorliegt. Dies kann beispielsweise erreicht werden, indem bereits beim Bereitstellen des wässrigen Monomerengemisches ein molarer Unterschuss an Dicarbonsäure oder Diamin vorgesehen ist. Sofern jedoch nach dem Verdampferreaktor ein Teil der Dicarbonsäuren oder Diamine durch Verdampfung aus dem Reaktionsgemisch entfernt wird, kann auch mit äquimolaren Mengen an Dicarbonsäuren und Diaminen im Verdampferreaktor gestartet werden, da nach dem Abscheider ein Unterschuss an Dicarbonsäuren oder Diaminen vorliegt. Das Monomerenverhältnis in Stufe A) wird so gewählt, dass am Ausgang von Stufe C) ein molarer Unterschuss an Dicarbonsäuren oder Diaminen von 1 bis 10 mol-%, bezogen auf die jeweils andere Komponente, vorliegt. Beispielsweise können bei 100 mol-% Dicarbonsäuren entsprechend 90 bis 99 mol-% Diamine am Ende von Stufe C) vorliegen. Die konkret im wässrigen Monomerengemisch einzustellende Stöchiometrie hängt von der Art der Monomeren ab und kann durch einfache Analytik des aus dem Abscheider in Stufe C) erhaltenen Gemisches bestimmt werden.

Hierzu kann beispielsweise das am Ende von Stufe C) erhaltene Polyamid oder Polyamid-Oligomere bezüglich der Carboxyl-Endgruppen und Amino-Endgruppen analysiert werden.

Beim Einsatz des vorstehend genannten bevorzugten Monomerengemisches wird Hexamethylendiamin nach dem Verdampferreaktor zum Teil gasförmig ausgetragen. Es ist nun möglich, beispielsweise mit äquimolaren Mengen an Hexamethylendiamin und Dicarbonsäuren zu starten, wodurch am Ende des Abscheiders ein Unterschuss an Hexamethylendiamin im (Prä)polymer vorliegt. Es ist jedoch auch möglich, mit einem molaren Überschuss an Hexamethylendiamin gegenüber Terephthalsäure und Isophthalsäure in Stufe A) zu starten, so dass am Ende von Stufe C) ein Unterschuss an Terephthalsäure/Isophthalsäure vorliegt. In diesem Fall wird dann Terephthalsäure/Isophthalsäure in dem Rohrreaktor in Stufe D) zudosiert.

Typischerweise wird in Stufe A) eine wässrige Salzlösung der Ausgangsmonomeren eingesetzt, da Diamine und Dicarbonsäuren Salze bilden.

Das Monomerengemisch besteht vorzugsweise aus 50 mol-% Dicarbonsäurengemisch und 50 mol-% Diamin oder Diamingemisch. Das Dicarbonsäuregemisch besteht aus 60 bis 88 Gew.-% Terephthalsäure und 12 bis 40 Gew.-% Isophthalsäure. Vorzugsweise liegen 64 bis 80 Gew.-%, insbesondere 64 bis 76 Gew.-% Terephthalsäure vor und entsprechen vorzugsweise 20 bis 36 Gew.-% und insbesondere 24 bis 36 Gew.-% Isphthalsäure. Ferner können auch bis zu 20 Gew.-% des Dicarbonsäuregemisches durch andere Dicarbonsäuren ersetzt sein. Bevorzugt sind dies 0 bis 10 Gew.-%, insbesondere 0 bis 5 Gew.-%. Sofern ein Teil des Dicarbonsäuregemisches durch andere Dicarbonsäuren ersetzt ist, liegt die Untergrenze der anderen Komponente vorzugsweise bei 0,5 Gew.-%, insbesondere bei 1 Gew.-%. Andere geeignete Dicarbonsäuren sind beispielsweise Adipinsäure, Pimelinsäure, Korksäure, Acelainsäure und Sebacinsäure sowie 7-Sulfoisophthalsäure.

Als Diaminkomponente wird Hexamethylendiamin eingesetzt, das bis zu 20 Gew.-% durch andere C₂-C₃₀-Diamine ersetzt sein kann. Bevorzugt sind 0 bis 10 Gew.-%, insbesondere 0 bis 5 Gew.-% des Hexamethylendiamins durch andere C₂-C₃₀-Diamine ersetzt. Sofern andere C₂-C₃₀-Diamine vorliegen, beträgt ihre Mindestmenge vorzugsweise 0,5 Gew.-%, insbesondere mindestens 1 Gew.-%. Geeignete weitere Diamine sind beispielsweise Tetramethylendiamin, Octamethylendiamin, Decamethylendiamin und Dodecamethylendiamin sowie m-Xylylendiamin, Bis-(4-aminophenyl)methan, Bis-(4-aminophenyl)propan-2,2 und Bis-(4-aminocyclohexyl)methan oder Mischungen davon.

Als zusätzliches Diamin wird vorzugsweise Bis(4-aminocyclohexyl)methan eingesetzt, das unter der Bezeichnung Dicycan von der BASF SE erhältlich ist.

Vorzugsweise werden neben Terephthalsäure, Isophthalsäure und Hexamethylendiamin keine anderen Dicarbonsäuren oder Diamine eingesetzt.

In Stufe B) wird das wässrige Gemisch aus Stufe A) in einen kontinuierlich betriebenen Verdampferreaktor überführt, in dem Diamine und Dicarbonsäuren bei einer Temperatur im Bereich von 100 bis 370°C, vorzugsweise 200 bis 340°C, und einem Druck im Bereich von 1 bis 50 bar, vorzugsweise 5 bis 30 bar, umgesetzt werden. Der Verdampferreaktor kann dabei in beliebiger geeigneter Weise ausgebildet sein. Es kann sich beispielsweise um Rohrbündelreaktoren handeln, wie sie in der EP-A-0 129 195 beschrieben sind. Vorzugsweise handelt es sich um einen senkrecht stehenden, von oben nach unten durchströmten Rohrreaktor.

Die Verweilzeit in Stufe B) beträgt vorzugsweise 0,2 bis 10 Minuten, besonders bevorzugt 1 bis 5 Minuten.

An den Verdampferreaktor schließt sich ein Abscheider an, der bei einer Temperatur von 100 bis 370°C, vorzugsweise 200 bis 340°C betrieben wird. Der Druck im Abscheider beträgt 1 bis 50 bar, bevorzugt 5 bis 30 bar. Die Verweilzeit in Stufe C) beträgt vorzugsweise 1 bis 45 Minuten, besonders bevorzugt 2 bis 15 Minuten. Im Abscheider werden gasförmige Komponenten, insbesondere Wasser und flüchtige Monomere, abgetrennt. Beispielsweise werden beim Einsatz des vorstehend beschriebenen bevorzugten Monomerengemisches etwa 1 bis 10% des ursprünglich eingesetzten Diamins Hexamethylendiamin zusammen mit Wasserdampf abgetrennt. Dieses gasförmige Gemisch kann sodann einer Destillation bzw. Rektifikation unterzogen werden, wobei Wasserdampf über Kopf abgezogen wird und ein Di-amin/Wasser-Gemisch im Sumpf erhalten wird. Dieses Gemisch kann in die Stufen A) oder B) oder in beide Stufen zurückgeführt werden. Allgemein werden in Stufe C) Wasserdampf und flüchtige Dicarbonsäuren oder Diamine abgetrennt, die nachfolgend durch Destillation aufgetrennt werden, wobei ein an Dicarbonsäuren oder Diaminen angereichertes wässriges Kondensat in eine oder beide der Stufen A) und B) zurückgeführt wird.

Durch den Anteil der mit der Verdampfung ausgeschleusten Diamine, die in das Verfahren zurückgeführt werden, kann ebenfalls der Unterschuss an Diaminen eingestellt werden.

An den Abscheider der Stufe C) schließt sich ein Rohr-Reaktor in Stufe D) an, in den das Gemisch aus Stufe C) zusammen mit Diamin oder Dicarbonsäure in einer zum Ausgleich des molaren Unterschusses geeigneten Menge geführt wird. Der Rohr-Reaktor wird bei einer Temperatur im Bereich von 150 bis 400°C, vorzugsweise 200 bis 370°C betrieben und auf eine Verweilzeit im Bereich von 10 Sekunden bis 30 Minuten eingestellt.

An den Rohr-Reaktor der Stufe D) schließt sich ein Extruder in Stufe E) an, in den das Gemisch aus Stufe D) geführt wird. Der Extruder wird bei einer Temperatur im Bereich von 150 bis 400°C, vorzugsweise 200 bis 370°C betrieben und auf eine Verweilzeit im Bereich von 10 Sekunden bis 30 Minuten eingestellt. Im Extruder werden ebenfalls gasförmige Komponenten durch Entgasungsöffnungen entfernt.

Geeignete Extruder mit Entgasungsstufen sind dem Fachmann bekannt. Es können dabei erfindungsgemäß bevorzugt Doppelschneckenextruder eingesetzt werden, bei denen es sich um gleichläufige oder gegenläufige Doppelschneckenextruder handeln kann. Für eine Beschreibung der Extruder kann auf EP-A-0 129 195 und DE-A-195 14 145 verwiesen werden.

In Stufe D) werden Diamin oder Dicarbonsäure zudosiert, je nachdem ob nach Stufe C) ein Unterschuss an Diamin oder Dicarbonsäure vorliegt. Die zum Ausgleich des molaren Unterschusses geeignete Menge kann durch einfache Versuche ermittelt werden, wobei im nach dem Extruder erhaltenen Polyamid der Carboxylendgruppengehalt und Amino-Endgruppengehalt bestimmt werden kann. Sofern zunächst mit einem Unterschuss an Diaminen gearbeitet wird, wird in Stufe D) vorzugsweise so viel Diamin zudosiert, dass sich der Amino-Endgruppengehalt um mindestens 20 mmol/kg erhöht. Der Amino-Endgruppengehalt am Ende von Stufe D) beträgt vorzugsweise 30 bis 250 mmol/kg, besonders bevorzugt 50 bis 100 mmol/kg oder 40 bis 220 mmol/kg. Auch ein Zufügen in anderen Stufen des erfindungsgemäßen Verfahrens ist möglich.

An die Extrusion können sich zudem eine Festphasen-Nachkondensation und ein Granulierungsschritt anschließen.

Die nach Stufe E) erhaltenen Polyamide weisen vorzugsweise eine Viskositätszahl im Bereich von 20 bis 200, besonders bevorzugt von 40 bis 80 auf, insbesondere beim Einsatz des vorstehend beschriebenen bevorzugten Monomerengemisches. Beim Einsatz von Hexamethylendiamin kann in Stufe D) auch ein anderes Diamin zudosiert werden, beispielsweise Dicycan. Zudem ist es erfindungsgemäß möglich, an unterschiedlichen Stellen des Verfahrens weitere Additive zuzugeben, wie Oxazoline, hyperverzweigte Polymere mit Amino- oder Carboxylgruppen und andere Additive. Die Additive können beispielsweise vor oder nach einer Austragspumpe im Anschluss an den Verdampferreaktor, als Coldfeed oder Hotfeed im Abscheider zugeführt werden.

Bevorzugte, erfindungsgemäß erhältliche Polyamide besitzen eine Glasübergangstemperatur im Bereich von 110 bis 150°C und einen Schmelzpunkt im Bereich von 280 bis 320°C. Sie weisen vorzugsweise eine Kristallinität von mehr als 20 % auf und sind daher nicht transparent.

Die erfindungsgemäß herstellbaren Polyamide eignen sich beispielsweise für die Fahrzeug- bzw. Automobilanwendung, z.B. für die Innenraumverkleidung von Fahrgastzellen, für Armaturenbretter, für Abdeckungen z.B. von Ventilgehäusen, für Befestigungssockel von Gebläse- und Lüftermotoren, für Basisplatten für die Steuerung, für Abgasrückführungskomponenten, für Luftversorgungsmodule z.B. von Turboaggregaten bzw. Turbodieselaggregaten wie Gehäuse von Ladeluftwärmetauschern (Intercooler), für die Auslegung des Drosselklappenstutzens von Benzin und Dieselmotoren, für benzin- und ölführende Systeme oder solche, die damit in Kontakt kommen können, in Form von Verbindungen (Konnektoren), Fittings, Filtergehäusen und Einspritzleisten, für Ein- und Auslassbereiche für Flüssigkeiten in Kühlsystemen, für Behälter und Verbindungsstücke für Bremsflüssigkeiten, für die Fahrtzeugelektrik bzw. Fahrzeugelektronik z.B. in Form von Verbindungen (Konnektoren) und Stecker für elektronische Steuerungen, für die Elektro-, Elektrik- und Elektronikanwendung, z.B. für Stecker, Kollektorhalterungen in Elektromotoren, Schaufelräder in Staubsaugern, Schaltelemente und Relais sowie Elektro- und Elektronikkomponenten, insbesondere solche, die mit Lötbandtechnik montiert werden, für die Trinkwasser-, Heizungs-, Sanitär- und Badanwendung, z.B. für Rohre, Dichtungen, Ventile, Armaturen und Behälter, für die Haushaltsanwendung, z.B. für Haushaltsgeräte wie Kaffee- und Espressomaschinen, weiße Waren wie Spül- und Waschmaschinen sowie Wäschetrockner oder Küchenbrausen, für die medizintechnische Anwendung, z.B. für Spritzen, Kanülen, Beutel, Handschuhe oder Auspresspistolen für Dentalmassen, für die Anwendung als Metallersatz, z.B. für den Spritzguss beispielsweise von Armaturen oder Spannringen.

### Beispiele

Die Anlage zur kontinuierlichen Herstellung von hochtemperaturbeständigen Polyamiden aus Diaminen (Hexamethylendiamin, HMD) und Dicarbonsäuren besteht aus den folgenden Funktionsgruppen:
Ansatzbereitung
Dosierung und Aufheizung
Vorkondensation
Nachkondensation in Abscheider
Nachkondensation in Rohr-Reaktor
HMD-Rektifikation
Entgasung und Granulierung

### Verfahrensbeschreibung:

Aus den Diaminen, Dicarbonsäuren, Regler und Wasser wird in der Ansatzbereitung im Rührkessel die Reaktionslösung hergestellt und in den Vorlagenbehälter überführt. Aus der Vorlage wird mittels Zulaufpumpe über den Aufheizer die Reaktionslösung in den Kopf des senkrecht stehenden Verdampferreaktors dosiert. In dem mit Füllkörpern gefüllten und mit Diphyl beheizten Apparat reagieren unter Druck und Temperatur die Monomere unter Wasserabspaltung (Polykondensation) zum niedermolekularen Vorprodukt. Das austretende Gemisch aus Vorprodukt, dampfförmigem Lösungs- und Reaktionswasser sowie Teil des unumgesetzten Diaminen und Disäuren wird in den sich anschließenden Abscheider geleitet. Dort trennt sich die Polymerschmelze von den dampfförmigen Anteilen. Die abgeführten Brüdenströme werden zur Rektifizierkolonne geführt und mit kaltem Wasser beregnet. Dadurch werden die verdampften Monomere und die mitgerissenen Polymerteilchen vom Wasserdampf getrennt. Diamine, die in Form wässriger Lösung im Sumpf anfällt, werden umgepumpt und nach Abtrennung der inzwischen verfestigten Polymerteilchen über Filter zur Reaktionslösung vor dem Verdampferreaktor zurückgepumpt. Die Polymerschmelze aus dem Abscheider wird zu einem Rohr-Reaktor geleitet und mit Amin angereichert. Über einem Regelventil wird die Schmelze aus dem Rohr-Reaktor zum Extruder dosiert, und das restliche Wasser wird ausgegast. In Strängen ausgetragenes Polymer wird mit Wasser gekühlt und granuliert.

### Ansatzbereitung

Sämtliche Komponenten des Ansatzes (ca. 2500 kg) werden im Rührkessel bei 95°C gelöst. Nach 60 min Lösezeit wird eine Probe zur pH-Bestimmung entnommen. Der pH-Wert wird durch Zugabe von HMD oder einem Terephthalsäure/Isophthalsäure-Gemisch auf einen pH-Wert von 6,5-7,05 eingestellt, um die Stöchiometrie des Ansatzes einzustellen. Anschließend wird die benötigte Reglermenge zugegeben.

Ist der Ansatz wie beschrieben hergestellt, kann er über eine Pendelleitung zum Vorlagekessel überführt werden.

### Dosierung und Aufheizung

### Vorkondensation

Aus dem Vorlagebehälter wird die Ansatzlösung über eine Feedpumpe, temperiert bei 95°C, zum Verdampferreaktor gepumpt.

In diesem mit Diphyl beheiztem Reaktor reagieren die Monomere unter Wasserabspaltung zu niedermolekularem d. h. kurzkettigem Polyamid. Gleichzeitig verdampft nahezu das gesamte Lösungs- und Reaktionswasser.

Der Verdampferreaktor besteht aus 10 Rohren mit einem Durchmesser von 33,6 mm und 4000 mm Länge. Die Füllung besteht aus 5mm-Raschigringen mit Mittelsteg.
Der Verdampferreaktor ist mit einem Sicherheitsventil eintrittsseitig abgesichert.

### Nachkondensation

Der nachgeschaltete Abscheider dient zur Phasentrennung der Mischung aus Präpolymer und Wasserdampf, das über ein Einlaufrohr in den Apparat einströmt. Der Abscheider hat eine Baulänge von 1800 mm und einen Innendurchmesser von 300 mm, wobei die letzten 250 mm konisch zulaufen. Das Einlaufrohr ist seitlich exzentrisch angeordnet. Mit Hilfe dieses nach unten geöffneten Rohres wird das Phasengemisch in der Hälfte des Abscheiders nahe der Wandung eingetragen.

Um das Präpolymer schmelzflüssig zu halten wird der Abscheider mit Diphyl über einen Doppelmantel temperiert. Die Brüden verlassen den Apparat über die Brüdenleitung im Deckel in Richtung Kolonne der Diamin-Rektifikation.

Da dieses System unter Druck (20 bar) steht, bleibt ein geringer Wasseranteil in der Polyamidschmelze gelöst.

Dieser Wasseranteil begrenzt den Molekulargewichtsaufbau und führt zu einer Schmelzpunktdepression.

Die Polyamidschmelze wird über ein Regelventil dem Entgasungsextruder zugeführt.

### Diamin-Rückführung

Die Brüden werden in eine unbeheizte Rektifizierkolonne eingeleitet. Dort werden sie im Gegenstrom mit Wasser gewaschen. Dabei werden wasserlösliche Oligomere mit dem Waschwasser aus der Kolonne ausgetragen. Die Steuerung des Druckes in der Kolonne erfolgt über ein dampfbeheiztes Regelventil am Kopf der Kolonne. Durch die Kopfhaube wird die Kolonne beregnet. Unterhalb der Kolonne befindet sich eine Standmessung über Differenzdruck. In der Kolonne werden die organischen Anteile aus den Brüden mittels Beregnung herausgewaschen. Aus dem Umwälzkreis des Kolonnensumpfes (ca. 1000 l/h) wird der niedergeschlagene Anteil in den Produktstrom vor dem Verdampferreaktor zurückgeführt. Die Rückführmenge beträgt etwa 40 l/h. Der Kopfstrom der Kolonne wird abgeführt. Dieser Kopfstrom (ca. 70 kg/h) enthält das gesamte Wasser und einen geringen Anteil Diamin (0,3-0,5%). Das Diamin muss, da es der Reaktion entzogen wird, als Verlust berücksichtigt werden.

### Entgasung und Granulierung

Ein Austragsventil regelt den konstanten Produktstrom zum Extruder. Beim Extruder handelt es sich um einen ZDSK 57. Die Abdichtung der Schnecke nach hinten erfolgt mittels einer Coldfeed-Dosierung von 2 kg/h Granulat. Auf dem Extruder wird das in der Polymerschmelze enthaltene Wasser über eine Vorwärts- und eine Rückwärtsentgasung entfernt. Die Polymerschmelze wird mit Unterwasser-Granulierung Technologie granuliert.

### Beispiele 1 bis 5

Die Mengen- und Verfahrensparameter sind aus der nachfolgenden Tabelle zu entnehmen.

Zu Wasser wurden Hexamethylendiamin-Lösung (69,47%-ig in Wasser, BASF), Metaxylendiamin (MXD), Terephthalsäure (TPA), Isophthalsäure (IPA) (Lonza) in einem Einsatzbehälter bei 93°C vermischt.

Salzlösung wurde in dem Verdampferreaktor bei der Produktausgangstemperatur und einem Druck (siehe Tabelle) gepumpt. Die Produkttemperatur und der-druck sind aus der Tabelle zu entnehmen. Metaxylendiamin (MXD) wurde in den Rohr-Reaktor nach dosiert.

Die Polymerschmelze wurde bei 320°C extrudiert und granuliert und dann wie aus der Tabelle ersichtlich, getempert.

Die Ergebnisse sind in der nachstehenden Tabelle zusammengefasst:

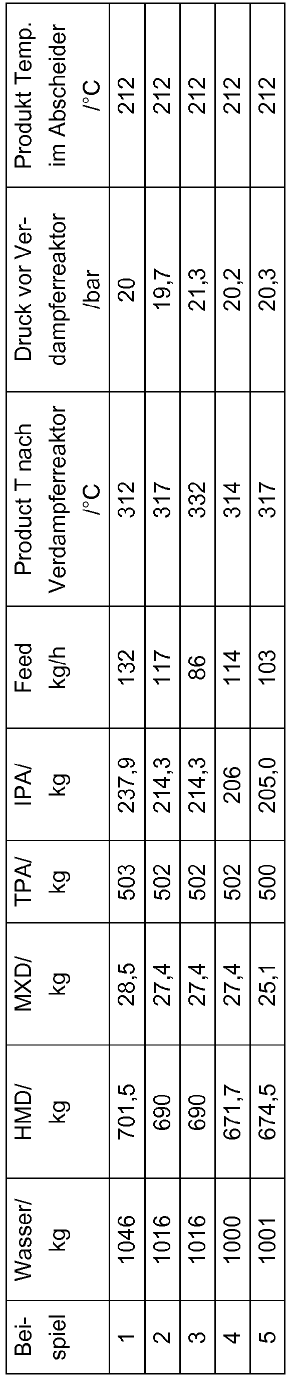

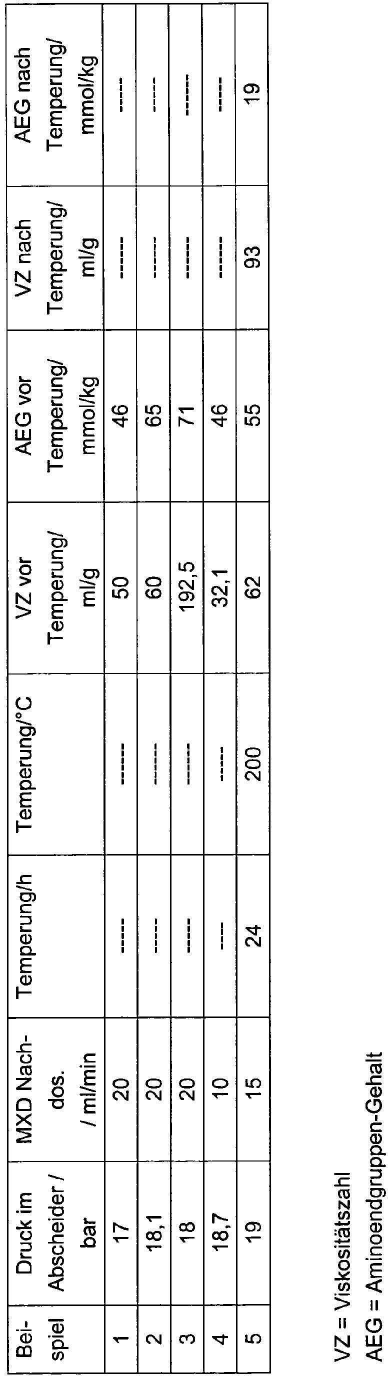

## Patentansprüche

1. Verfahren zur Herstellung eines Polyamids auf Basis von Dicarbonsäuren und Diaminen mit folgenden Stufen:
A) Bereitstellen eines wässrigen Monomerengemisches aus Dicarbonsäuren und Diaminen, wobei das molare Verhältnis von Dicarbonsäuren zu Diaminen so eingestellt wird, dass am Ausgang von Stufe C) ein molarer Unterschuss an Dicarbonsäuren oder Diaminen von 1 bis 10 mol-%, bezogen auf die jeweils andere Komponente, vorliegt,
B) Überführen des wässrigen Gemisches aus Stufe A) in einen kontinuierlich betriebenen Verdampferreaktor, in dem Diamine und Dicarbonsäuren bei einer Temperatur im Bereich von 100 bis 370°C und einem Druck im Bereich von 1 bis 50 bar umgesetzt werden,
C) Überführen des Gemisches aus Stufe B) in einen Abscheider, der bei einer Temperatur im Bereich von 100 bis 370°C und einem Druck im Bereich von 1 bis 50 bar betrieben wird, unter Abtrennung von gasförmigen Komponenten,
D) Überführen des Gemisches aus Stufe C) zusammen mit Diamin oder Dicarbonsäure in einer zum Ausgleich des molaren Unterschusses geeigneten Menge in einen Rohr-Reaktor, der bei einer Temperatur im Bereich von 100 bis 370°C und einem Druck im Bereich von 1 bis 50 bar betrieben wird, für eine Verweilzeit im Bereich von 10 Sekunden bis 30 Minuten,
E) Überführen des Gemisches aus Stufe D) in einen Extruder, der bei einer Temperatur im Bereich von 150 bis 400°C betrieben wird, für eine Verweilzeit im Bereich von 10 Sekunden bis 30 Minuten, unter Entfernung von gasförmigen Komponenten durch Entgasungsöffnungen,
wobei das Monomerengemisch in Stufe A) aus einem Dicarbonsäurengemisch aus 60 bis 88 Gew.-% Terephthalsäure und 12 bis 40 Gew.-% Isophthalsäure, in dem auch bis zu 20 Gew.-% des Dicarbonsäuregemisches durch andere Dicarbonsäuren ersetzt sein können, und Hexamethylendiamin besteht, das bis zu 20 Gew.-% durch andere C₂₋₃₀-Diamine ersetzt sein kann.

2. Verfahren nach Anspruch 1, **dadurch gekennzeichnet, dass** sich an die Extrusion eine ein Granulierungsschritt und Festphasen-Nachkondensation anschließen.

3. Verfahren nach Anspruch 1 oder 2, **dadurch gekennzeichnet, dass** in Stufe C) Wasserdampf und flüchtige Dicarbonsäuren oder Diamine abgetrennt werden, die nachfolgend durch Destillation aufgetrennt werden, wobei ein an Dicarbonsäure oder Diamin angereichertes wässriges Kondensat in eine oder beide der Stufen A) und B) zurückgeführt wird.

4. Verfahren nach einem der Ansprüche 1 bis 3, **dadurch gekennzeichnet, dass** der Verdampferreaktor ein senkrecht stehender, von oben nach unten durchströmter Rohrreaktor ist.

5. Verfahren nach Anspruch 1, **dadurch gekennzeichnet, dass** im Monomerengemisch äquimolare Mengen an Dicarbonsäuren und Diaminen vorliegen, im Abscheide in Stufe C) 0,5 bis 15 Gew.-% des in Stufe A) eingesetzten Hexamethylendiamins gasförmig abgetrennt werden und in Stufe D) so viel Hexamethylendiamin zugesetzt wird, so dass am Ende der Stufe E) im erhaltenen Polyamid der Gehalt an Amino-Endgruppen 40 bis 220 mmol/kg beträgt.

6. Verfahren nach Anspruch 1, **dadurch gekennzeichnet, dass** in Stufe D) so viel Diamin zudosiert wird, dass sich der Amino-Endgruppengehalt um mindestens 20 mmol/kg erhöht.

7. Verfahren nach einem der Ansprüche 1 bis 6, **dadurch gekennzeichnet, dass** Fasern, Füllstoffe, Farbstoffe, Hilfsstoffe oder deren Gemische direkt im Extruder zur Compoundierung zugeführt werden.

8. Verfahren nach einem der Ansprüche 1 bis 3, **dadurch gekennzeichnet, dass** der Rohr-Reaktor vollständig oder teilweise mit statischen Mischern ausgestattet ist.

## Claims

1. A process for preparing a polyamide based on dicarboxylic acids and diamines, comprising the following stages:
A) providing an aqueous monomer mixture composed of dicarboxylic acids and diamines, where the molar ratio of dicarboxylic acids to diamines is adjusted such that, at the outlet of stage C), there is a molar deficiency of dicarboxylic acids or diamines of 1 to 10 mol%, based on the respective other component,
B) transferring the aqueous mixture from stage A) into a continuous evaporator reactor in which diamines and dicarboxylic acids are converted at a temperature in the range from 100 to 370°C and a pressure in the range from 1 to 50 bar,
C) transferring the mixture from stage B) into a separator which is operated at a temperature in the range from 100 to 370°C and a pressure in the range from 1 to 50 bar with removal of gaseous components,
D) transferring the mixture from stage C) together with diamine or dicarboxylic acid in an amount suitable for compensation for the molar deficiency into a tubular reactor which is operated at a temperature in the range from 100 to 370°C and a pressure in the range from 1 to 50 bar, for a residence time in the range from 10 seconds to 30 minutes,
E) transferring the mixture from stage D) into an extruder which is operated at a temperature in the range from 150 to 400°C for a residence time in the range from 10 seconds to 30 minutes with removal of gaseous components through venting orifices,
where the monomer mixture in stage A) consists of a dicarboxylic acid mixture of 60 to 88% by weight of terephthalic acid and 12 to 40% by weight of isophthalic acid, in which up to 20% by weight of the dicarboxylic acid mixture may also be replaced by other dicarboxylic acids, and hexamethylenediamine, up to 20% by weight of which may be replaced by other C₂₋₃₀-diamines .

2. The process according to claim 1, wherein the extrusion is followed by a pelletizing step and solid phase postcondensation.

3. The process according to claim 1 or 2, wherein water vapor and volatile dicarboxylic acids or diamines are removed in stage C) and are then separated by distillation, and an aqueous condensate enriched in dicarboxylic acid or diamine is recycled into one or both of stages A) and B).

4. The process according to any of claims 1 to 3, wherein the evaporator reactor is a vertical tubular reactor through which the flow is from the top downward.

5. The process according to claim 1, wherein equimolar amounts of dicarboxylic acids and diamines are present in the monomer mixture, 0.5 to 15% by weight of the hexamethylenediamine used in stage A) is removed in gaseous form in the separator in stage C) and sufficient hexamethylenediamine is added in stage D) that the content of amino end groups in the polyamide obtained at the end of stage E) is 40 to 220 mmol/kg.

6. The process according to claim 1, wherein sufficient diamine is metered in in stage D) that the amino end group content is increased by at least 20 mmol/kg.

7. The process according to any of claims 1 to 6, wherein fibers, fillers, dyes, assistants or mixtures thereof are supplied to the compounding directly in the extruder.

8. The process according to any of claims 1 to 3, wherein the tubular reactor is equipped completely or partially with static mixers.

## Revendications

1. Procédé pour la production d'un polyamide à base d'acides dicarboxyliques et de diamines, comportant les étapes suivantes :
A) disposition d'un mélange aqueux de monomères à base d'acides dicarboxyliques et de diamines, le rapport molaire des acides dicarboxyliques aux diamines étant ajusté de manière qu'à la sortie de l'étape C) soit présente une quantité molaire insuffisante d'acides dicarboxyliques ou de diamines de 1 à 10 % en moles, par rapport à l'autre composant respectif,
B) transfert du mélange aqueux provenant de l'étape A) dans un réacteur-évaporateur fonctionnant en continu, dans lequel on fait réagir les diamines et les acides dicarboxyliques à une température dans la plage de 100 à 370 °C et sous une pression dans la plage de 1 à 50 bars,
C) transfert du mélange provenant de l'étape B) dans un séparateur qui est conduit à une température dans la plage de 100 à 370 °C et sous une pression dans la plage de 1 à 50 bars, avec séparation de composants gazeux,
D) transfert du mélange provenant de l'étape C), conjointement avec de la diamine ou de l'acide dicarboxylique, en une quantité appropriée pour compenser la quantité molaire insuffisante, dans un réacteur tubulaire qui est conduit à une température dans la plage de 100 à 370 °C et sous une pression dans la plage de 1 à 50 bars, pendant un temps de séjour dans la plage de 10 secondes à 30 minutes,
E) transfert du mélange provenant de l'étape D) dans une extrudeuse qui est conduite à une température dans la plage de 150 à 400 °C, pendant un temps de séjour dans la plage de 10 secondes à 30 minutes, avec élimination de composants gazeux par des orifices de dégazage,
le mélange de monomères dans l'étape A) consistant en un mélange d'acides dicarboxyliques constitué de 60 à 88 % en poids d'acide téréphtalique et de 12 à 40 % en poids d'acide isophtalique, dans lequel jusqu'à 20 % en poids du mélange d'acides dicarboxyliques peuvent également être remplacés par d'autres acides dicarboxyliques, et d'hexaméthylènediamine, qui peut être remplacée à raison de jusqu'à 20 % en poids par d'autres diamines en C₂-C₃₀.

2. Procédé selon la revendication 1, **caractérisé en ce qu'**à l'extrusion font suite une étape de granulation et une post-condensation en phase solide.

3. Procédé selon la revendication 1 ou 2, **caractérisé en ce que** dans l'étape C) on sépare de la vapeur d'eau et des acides dicarboxyliques volatils ou des diamines volatiles, qui sont ensuite séparés les uns des autres par distillation, un condensat aqueux enrichi en acide dicarboxylique ou diamine étant recyclé dans l'une des étapes A) et B) ou les deux.

4. Procédé selon l'une quelconque des revendications 1 à 3, **caractérisé en ce que** le réacteur évaporateur est un réacteur placé verticalement, à écoulement de haut en bas.

5. Procédé selon la revendication 1, **caractérisé en ce que** dans le mélange de monomères sont présentes des quantités équimolaires d'acides dicarboxyliques et de diamines, dans la séparation dans l'étape C) on sépare à l'état gazeux 0,5 à 15 % en poids de l'hexaméthylènediamine utilisée dans l'étape A) et dans l'étape D) on ajoute une quantité telle d'hexaméthylènediamine qu'à la fin de l'étape E) la teneur en groupes terminaux amino du polyamide obtenu vaut de 40 à 220 mmoles/kg.

6. Procédé selon la revendication 1, **caractérisé en ce que** dans l'étape D) on ajoute par addition dosée une quantité telle de diamine que la teneur en groupes terminaux amino est augmentée d'au moins 20 mmoles/kg.

7. Procédé selon l'une quelconque des revendications 1 à 6, **caractérisé en ce qu'**on envoie directement dans l'extrudeuse pour le compoundage des fibres des charges, des colorants, des adjuvants ou des mélanges de ceux-ci.

8. Procédé selon l'une quelconque des revendications 1 à 3, **caractérisé en ce que** le réacteur tubulaire est muni en totalité ou en partie de mélangeurs statiques.
